# EUROPEAN PATENT APPLICATION

(11) **EP 2 575 335 A1**
(43) Date of publication of application: **03.04.2013**
(21) Application number: 11306259.0
(22) Date of filing: 30.09.2011
(51) Int. Cl.: H04M 3/30, H04M 11/06

(54) **Diagnostic Engine for DSL communication lines**

(71) Applicant: Alcatel Lucent, 75007 Paris (FR)
(72) Inventor: Drooghaag, Benoît, 1421 Ophain-Bois-Seigneur-Isaac (BE); Wahibi, Issam, 1030 Schaerbeeck (BE)
(74) Representative: ALU Antw Patent Attorneys

(57) **Abstract**

A diagnostic engine for remotely analyzing a fault of a telecommunication line which is adapted to be coupled to a termination of the line is described. The diagnostic engine comprises:
- a first measurement module adapted to be coupled to the termination and adapted to measure first predetermined line characteristics according to a Dual Ended Line Testing measurement technique; and
- a fault detection module to detect, based upon the first predetermined line characteristics, a fault on the line and to inform a determining module thereupon with a fault signal; and
- a showtime module to be coupled to the termination and to determine whether the line is in showtime mode and to inform the determining module with a showtime loss signal; and
- the determining module being adapted for:
a) in the event of reception of such showtime loss signal, to send an activation signal to activate a second measurement module; and for
b) in the event of reception of such fault signal, to send at a predetermined time moment an interrupt signal to an interrupt module and to send thereafter such activation signal; and

- the interrupt module adapted to be coupled between the termination and the determining module and to interrupt, upon reception of such interrupt signal, showtime mode of the line; and
- the second measurement module adapted to be coupled to the termination and to measure, upon reception of such activation signal, second predetermined line characteristics according to a Single Ended Line Testing measurement technique; and
- a combining module (CM) coupled to the first and the second measurement module and adapted to combine the measured first and second predetermined line characteristics of the line and to analyze therewith further features of the fault. (Figure 2).

## Description

The present invention relates to a diagnostic engine for remotely analyzing a fault of a telecommunication line and a method for remotely analyzing a fault of such line.

Access network operators have a challenge of responding to growing needs of customers to benefit from new high data-rate multimedia services over access networks such as Digital subscriber Lines DSL access networks. With the expansion of the DSL deployment, the pre-qualification and maintenance of the DSL network is essential.

Dual Ended Line Testing and Single-Ended Line Testing SELT are two loop test and qualification technologies.

For DELT, measurements are carried out by the modems at both loop ends, while the tools which can realize SELT are incorporated only in the modems at remote unit or central office. Other difference between SELT and DELT is that the SELT is done when the DSL line is not in showtime, whereas the DELT can be realized only in showtime mode i.e. when the service is established.

The expression Showtime mode is used in the DSL terminology to describe the mode where the user and the network can begin communications over the access network. This means that the known procedures that are utilized to enable rate adaptation; and adjustment of bandwidth and the data rate that can be supported on a particular copper loop to attain a certain bit error rate based on a Service Level Agreement SLA; or to achieve longer loop lengths or reach, are completed i.e. the initial rate adaptive operation and power adjustments are performed and communication between the network and a user can begin.

The Dual Ended Line Testing DELT is based on the exploitation of DSL physical layer parameters. DELT testing identifies issues on the higher line frequencies and enables the detection of problems such as bad contacts, interference, unbalanced loops, etc. The measurements for DELT are carried out by the modems at both loop ends and are done only when the DSL service is active i.e. the DSL line is in showtime mode. Dual-ended-line-test DELT measurement technique diagnoses problems by using the operational parameters of the line and quantifies directly their impact on the DSL service. Since, the DELT measurements are performed by the xDSL modems themselves when the line is in showtime mode i.e. in service or just before the line enters in service mode i.e. during the synchronization mode phase, DELT requires the connection of modems to the line as well as the presence of DSL service. When the line is broken, or when no Customer Premise Equipment CPE is present, measurements of line characteristics are unavailable. A dual ended line testing module can also be comprised in a diagnostic engine i.e. a test arrangement for collecting dual ended line testing measurements. As described above the measurements for DELT are executed by a telecommunication access node such as a Digital subscriber Line Access Multiplexer DSLAM and the customer premises equipments CPE's itself. The measurements are e.g. stored in the Management Information Base of the Access Node.

The SELT is based on the reflectometry. An excitation signal is injected at a termination of the line and the reflected signal i.e. the corresponding echoed signal is measured at the same side. Then, these two signals, excitation signal and measured signal, are compared and a reflectogram is computed and line discontinuities can be detected and localized. SELT is performed in a broad frequency band and is only done when the DSL service is interrupted i.e. the DSL line is not in showtime.

The tools which can realize these two approaches, DELT and SELT, are incorporated in the modems at a remote unit or in a central office. Such known diagnostic engines for remotely determining global line characteristics of a telecommunication line can be a complete module application which comprises a DELT measurement module and a SELT measurement module. Such a Diagnostic Engine is able to diagnose, to start SELT measurements or to start DELT measurements, to detect faults and to stabilize and to improve the performance in DSL lines.

Since the DELT technique and SELT technique have their own advantages and inconveniences, SELT can be activated complementary as a reactive process to the DELT in order to overcome the DELT limitations. Indeed, DELT is able to detect the existence of a fault but DELT is not able to localize the fault. So, DELT is not able to localize a bridged-tap, short to ground GND and bad contacts, ... . This is however possible with SELT.

While DELT is being performed during showtime of a line, and a problem occurs whereby the customer complains at the helpdesk, currently, a manual intervention of the operator is required to trigger the SELT measurements. Hereby a lot of time is spent by executing the manual procedure and a high cost for operators is generated.

An object of the present invention is to provide a diagnostic engine for remotely analyzing a fault of a telecommunication line and a related method, such as the known types but wherein a manual triggering of the process is avoided.

According to the invention, this object is achieved due to the fact that upon detection of deviations in the results of daily line testing measurements such as DELT i.e. faults are detected by DELT or showtime is lost, the execution of a service-interruption line testing measurement such as SELT is automatically triggered. In this way the solution avoids manually triggering of the process and the process becomes a proactive process i.s.o. a reactive process.

Indeed, a diagnostic engine for remotely analyzing a fault of a telecommunication line is claimed. The diagnostic engine is coupled to a termination of the line and comprises:
- a first measurement module adapted to be coupled to the termination and adapted to measure first predetermined line characteristics according to a Dual Ended Line Testing measurement technique; and
- a fault detection module to detect, based upon the first predetermined line characteristics, a fault on the line and to inform a determining module thereupon with a fault signal; and
- a showtime module to be coupled to the termination and to determine whether the line is in showtime mode and to inform the determining module with a showtime loss signal; and
- the determining module being adapted for:
   a) in the event of reception of such showtime loss signal, to send an activation signal to activate a second measurement module; and
   b) in the event of reception of such fault signal, to send at a predetermined time moment an interrupt signal to an interrupt module and to send thereafter such activation signal; and
- the interrupt module adapted to be coupled between the termination and the determining module and to interrupt, upon reception of such interrupt signal, showtime mode of the line; and
- the second measurement module adapted to be coupled to the termination and to measure, upon reception of such activation signal, second predetermined line characteristics according to a Single Ended Line Testing measurement technique; and
- a combining module coupled to the first and the second measurement module and adapted to combine the measured first and second predetermined line characteristics of the line and to analyze therewith further features of the fault.

In this way, the method for remotely analyzing a fault of a telecommunication line, describes measuring first predetermined line characteristics at the termination of the line according to a Dual Ended Line Testing measurement technique. Based upon the first predetermined line characteristics, a fault on the line can be detected. The occurrence of a fault can be determined by e.g. comparing over different and longer time periods the measured values. In the event when major deviations are registered, the presence of a fault can be suspected. As such, based upon the DELT measurements, faults such bridge-tap, short to ground GND or bad contacts can be detected.

The limitation of DELT is however, that based upon the DELT measurements, it is not possible to localize the faults.

The following steps are describing a solution to this problem.

A first step is that after the detection of the fault on the line a determining module is informed by means of a fault signal.

However DELT works only in active mode i.e. synchronization mode of the line or showtime mode as described above and on the opposite, for SELT the line may not be in such an activity mode. Therefore the steps of determining with a showtime module whether the line is in showtime mode and informing the determining module with a showtime loss signal are introduced.

The determining module performs the following steps:
a) in the event of reception of such a showtime loss signal, sending an activation signal for activation of a second measurement module; and
b) in the event of reception of the fault signal, sending at a predetermined time moment an interrupt signal to an interrupt module and sending thereafter such activation signal.

Upon reception of such an interrupt signal an interrupt module performs a step of interrupting the showtime mode of the line upon which a fault was detected. With the second measurement module a step of measuring, upon reception of such activation signal, second predetermined line characteristics at the termination of the line according to a Single Ended Line Testing measurement technique is performed. Finally a steps of combining the measured first and second predetermined line characteristics of the line and analyzing therewith further features of the fault is realized by a combining module.

So, since showtime is disabled whereby SELT can be triggered the DELT and SELT measurements can be combined whereby the DELT-based detected fault can be further analyzed to localize the fault in the line. The basic idea of this application is, when a fault is detected by DELT, the DELT analysis is automatically completed with SELT measurements by disabling the showtime mode when showtime mode is present and by proactively and automatically triggering start-up of the SELT measurements.

The main benefit of this solution resides in the fact that instead of using separately DELT or SELT, the advantages of both DELT and SELT are exploited by using SELT as a complementary tool for DELT by means of automatically switching from the first DELT measurement technique to the second SELT measurement technique. These two approaches collaborate automatically and avoid manual intervention for obtaining more information about bridge-tap, short to ground GND and bad contacts. Repair actions are taken in this way before customer complaints are received. An automatic process is designed which triggers SELT once a fault is detected by DELT. In this way DSL operators are gaining time, reduce the costs and the number of customer complaints at the helpdesk. It gives a real added value to known diagnostic modules.

As mentioned above, before starting SELT, the showtime mode must be disabled if it is active. There are different possibilities to ensure disablement of showtime.

A first embodiment is described by, during operation of the diagnostic engine, determining the predetermined interrupt time moment as a time moment substantially shortly after detection of the fault by the fault detection module. In this way, the service is interrupted directly after fault detection by the first measurement module.

A second implementation is described by, during operation of the diagnostic engine, determining the predetermined interrupt time moment as a time moment within a period of statistically unlikely use of the line by a user. This possibility is in fact waiting for a period when statistically it is unlikely that the customer is connected such as e.g. in the middle of the night.

Another possibility is that, during operation of the diagnostic engine, the predetermined time moment for interruption is a time moment within a period for which substantially no user traffic is measured.

A fourth embodiment is realized when, during operation of the diagnostic engine, the predetermined time moment to interrupt showtime is a time moment substantially shortly after detection of showtime-loss. Hereby the determining module received a fault signal and waits for spontaneous showtime loss i.e. reception of a showtime loss signals for determination of the predetermined time moment. At this predetermined time moment the determining module should send an interrupt signal for actively interrupting showtime of the line. However, this step becomes in fact void, since showtime is already lost. But, nevertheless the activation signal to activate the SELT must be sent anyway.

Furthermore, the diagnostic engine according to the present application is coupled to the termination of the line that is located at a telecommunication access node location.

As mentioned above, the telecommunication access line can be a DSL telecommunication line.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

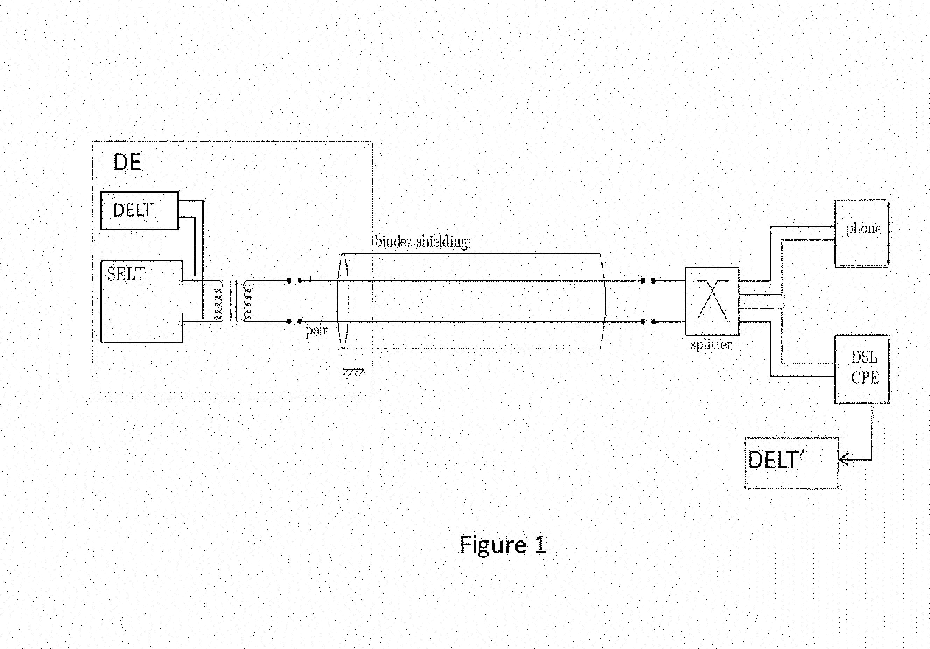

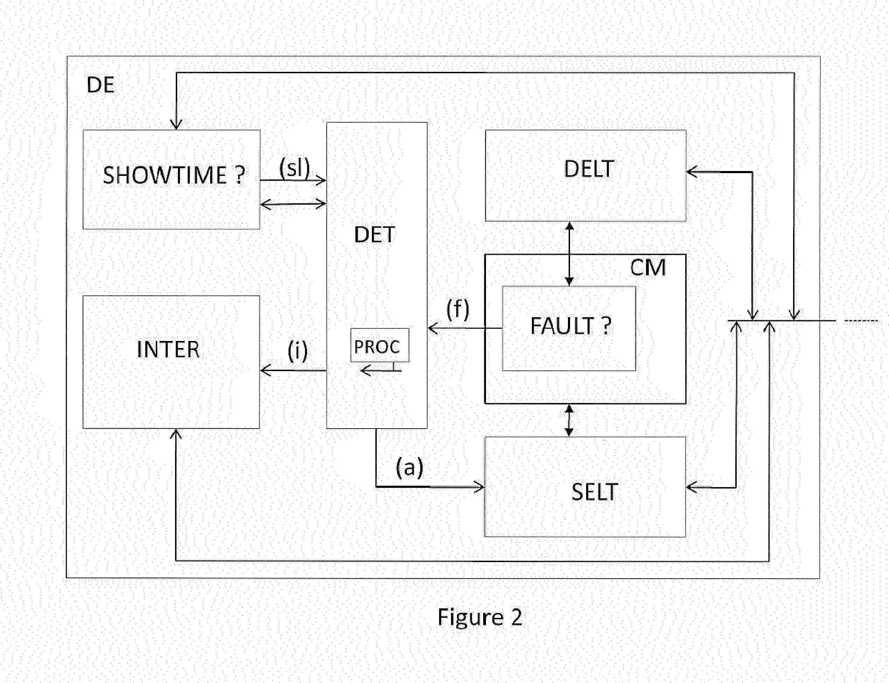

The above and other objects and features of the invention will become more apparent and the invention itself will be best understood by referring to the following description of an embodiment taken in conjunction with the accompanying drawings wherein Figure 1 represents an access telecommunication line coupled to a diagnostic engine and Figure 2 represents a diagnostic engine according to the present application.

The working of the device according to the present invention in accordance with its telecommunication environment that is shown in Figure 2 will be explained by means of a functional description of the different blocks shown therein. Based on this description, the practical implementation of the blocks will be obvious to a person skilled in the art and will therefore not be described in details. In addition, the principle working of the method for remotely analyzing a fault of a telecommunication line is described in further detail.

Referring to Figure 1, an access telecommunication line is shown. As a matter of example, the line is coupled at one termination to two end-user devices i.e. a telephone device and a DSL Customer Premises Equipment CPE. The line is coupled with the other termination to a diagnostic engine DE. The diagnostic engine DE comprises a DELT module and a SELT module.

In the following paragraphs the global working of the respective measurement techniques DELT and SELT will be explained.

A telephone line realized by means of a twisted pair in a grounded binder shielding is shown as the telecommunication access line.

In order to investigate operational parameters of the line and to directly quantify their impact on the DSL service, the DELT measurement technique is used. Figure 1 shows two DELT modems: DELT and DELT'. The Dual-Ended Line Test DELT measurements are performed by these xDSL modems themselves when the line is in service i.e. in showtime mode or just before the line enters in showtime mode i.e. during the initialization phase of the line. The resulting measured line characteristics are stored in the modem equipments and can be polled by a software having access to the operator management network. As the measurements are done by the modems, DELT and DELT', themselves, DELT is only available when the modems are connected to the line at both sides and when the modems have been or are in service for a while. When the line is broken, or when no Customer Premise Equipment CPE is present, those measurements get unavailable or meaningless. DELT is used to detect problems on the physical layer and quantify their impact on the service. The measurements are taken in the xDSL band (typical from 20 kHz to a few MHz depending on the xDSL technology type), which makes them very useful to quantify the impact on the problem to the xDSL service that should work within the same frequency band.

In order to investigate the DSL frequency bands, the Single Ended Line Test measurement technique SELT is used. SELT is a reflectometry technique which analyzes wave reflections within the entire DSL-frequencies spectrum. With this SELT technique it is possible to determine electrical properties such as an opened wire. A SELT module is also coupled to the two wires of the pair. The analysis signal passes through a coil transformer which acts as a high-pass filter to prevent DC component measurements. Based upon the SELT measured line characteristics it is possible to estimate physical properties and global line characteristics of the telecommunication line such as loop length, loop termination and detection of specific faults. Compared to DELT, SELT provides a reliable estimation of the fault location. Also complex loop topologies or phenomena, showing properties within the DSL frequencies, such as the presence of bridge taps, can be identified and localized by using this SELT measurement technique.

As explained above, the diagnostic engine DE comprises such a first measurement module DELT and such a second measurement module SELT. Also, the DELT technique is not sufficient to analyze all the features of a fault. Furthermore the DELT technique can be combined with the SELT technique. However, this is a manual combination which is executed by the operator upon customer complaints.

This problem is solved with an automatic diagnostic engine DE according to the present application and which is shown in Figure 2.

Referring to Figure 2, the diagnostic engine DE comprises a first measurement module DELT and a second measurement module SELT. Both measurement modules are coupled to the telecommunication line as explained above. It has to be remarked that for simplicity of this Figure 2, only one line is shown for the representation of the coupling to the twisted pair.

In addition to the DELT and SELT module, the diagnostic engine DE further comprises a fault detection module FAULT, a determining module DET, a Showtime module SHOWTIME, an interrupt module INTER and a combining module CM.

The telecommunication line is, besides being coupled to the SELT and DELT module, also coupled to the determining module DET, to the showtime module SHOWTIME and to the interrupt module INTER.

The fault module FAULT is coupled to the first measurement module DELT and, according to this embodiment, the fault module FAULT is comprised in the combining module CM.

The fault module FAULT is further coupled to the determining module DET which on its turn is coupled to the showtime module SHOWTIME, the interrupt module INTER and the second measurement module SELT.

The working of the diagnostic engine DE according to the present application and with the different signals will now be explained.

As explained above, the first measurement module DELT measures the first predetermined line characteristics according to a Dual Line Testing measurement technique. This DELT measurement technique is similar to the DELT measurement technique as explained for Figure 1.

The DELT measurements are saved in a memory module (not shown), analyzed and compared to previous measurement. This memory can for instance be integrated in the fault detection module FAULT. In the event of a major deviation between actual measurements and previous measurements, the fault detection module FAULT detects based upon these first predetermined line characteristics a fault and automatically generates a fault signal (f) and inform the determining module DET.

Upon reception of such a fault signal (f), the determining module DET needs to known whether the status of the line i.e. it needs to know whether the line is in showtime or not.

According to the actual embodiment the determining module is coupled to the showtime module SHOWTIME in order to communicate and to be informed about the status of the line e.g. showtime, no showtime, loss of showtime, ...

For instance, in the event when the line has lost its showtime mode status, the showtime module SHOWTIME informs the determining module DET with a showtime loss signal (sl).

It has to be remarked that the determination of showtime-mode by the showtime module SHOWTIME is not limited to a direct coupling to the line itself. Alternative embodiments such as e.g. analyzing of the received data at the network site can be used as well.

Furthermore, the determining module DET communicates with the interrupt module INTER in order to interrupt eventual showtime mode of the line by means of sending an interrupt signal (i). Upon reception of such an interrupt signal (i) from the determining module DET, the interrupt module INTER interrupts the showtime mode of the line.

In the event when the determining module DET decides to activate the second measurement module SELT it transmits an activation signal (a) to this second measurement module SELT.

While DELT measurements are taken during showtime of a line, the following two events are of importance for the automatic triggering of SELT.
a) The reception of a showtime loss signal (sl) by the determining module DET from the showtime module SHOWTIME. Such a showtime loss, without any trigger from the fault detection module, can be produced by the customer or upon initiative of the operator for any reason. The idea is to take advantage of this showtime loss to complete the DELT measurement automatically with the SELT measurements. So, an activation signal (a) is send by the determining module DET to the second measurement module SELT.
b) The reception of a fault signal (f) by the determining module DET from the fault detection module FAULT informs the determining module DET that a DELT-fault has been noticed. The idea of this situation is to automatically complete the DELT fault information with SELT fault information. So, the determining module determines a time moment and sends at this predetermined time moment:
   - an interrupt signal (i) to the interrupt module INTER in order to interrupt showtime of the line and to enable thereby SELT measurements; and
   - an activation signal (a) to the second measurements module SELT in order to indeed activate the SELT measurements.

The determination of the predetermined time-moment is realized with a processor PROC, shown in Figure 2 being comprised in the determining module DET.

One possible time-moment for interrupting showtime is practically immediately after detection of the fault i.e. upon reception of the fault signal (f). In this way the predetermined time-moment is a time moment substantially shortly after detection of the fault.

Another possible time moment for interruption of the showtime mode is a time moment within a period for which it is statistically unlikely that the telecommunication line is used by one of the users of the end-user equipment. Such a statistically determined period could be for instance in the middle of the night. This period can be determined as an average in time for one respective line, but can as well be determined as an average over a plurality of lines.

A further possible implementation of the time moment for interruption is a time moment within a period for which substantially no user traffic is measured. The difference with the previous method is that here the actual measured traffic is taken into account whereas for the previous method, the statistics are taken into account.

Finally a last way for determination of the predetermined time moment is the approach of spontaneous showtime loss. In this way the processor PROC introduces a delay until the determining module DET receives from the showtime module SHOWTIME a showtime loss signals (sl) which indicates that, although showtime was active at the time when the fault was detected, it has been lost spontaneously in the mean time. The transmission of the determining module DET of an interrupt signal (i) to the interrupt module (INTER) becomes in fact void. Nevertheless, the determining module DET must sent the activation signal (a) to the second measurement module SELT.

The second measurement module SELT is further adapted to start measurement of second predetermined line characteristics according to a Single Ended Line Testing measurement technique upon reception of an activation signal (a). This SELT measurement technique is similar to the SELT measurement technique as explained for Figure 1.

Finally, the combining module CM combines the measured first and second predetermined line characteristics of the line and analyzes therewith further features of the fault.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A diagnostic engine (DE) for remotely analyzing a fault of a telecommunication line, said diagnostic engine being adapted to be coupled to a termination of said line and **characterized in that** said diagnostic engine comprises:
- a first measurement module (DELT) adapted to be coupled to said termination and adapted to measure first predetermined line characteristics according to a Dual Ended Line Testing measurement technique; and
- a fault detection module (FAULT) to detect, based upon said first predetermined line characteristics, a fault on said line and to inform a determining module (DET) thereupon with a fault signal; and
- a showtime module (SHOWTIME) to be coupled to said termination and to determine whether said line is in showtime mode and to inform said determining module (DET) with a showtime loss signal; and
- said determining module (DET) being adapted for:
a) in the event of reception of such showtime loss signal, to send an activation signal to activate a second measurement module (SELT); and
b) in the event of reception of such fault signal, to send at a predetermined time moment an interrupt signal to an interrupt module (INTER) and to send thereafter such activation signal; and
- said interrupt module (INTER) adapted to be coupled between said termination and said determining module and to interrupt, upon reception of such interrupt signal, showtime mode of said line; and
- said second measurement module (SELT) adapted to be coupled to said termination and to measure, upon reception of such activation signal, second predetermined line characteristics according to a Single Ended Line Testing measurement technique; and
- a combining module (CM) coupled to said first and said second measurement module and adapted to combine said measured first and second predetermined line characteristics of said line and to analyze therewith further features of said fault.

2. The diagnostic engine (DE) of claim 1, **characterized in that** during operation of said diagnostic engine, said predetermined interrupt time moment being a time moment substantially shortly after detection of said fault by said fault detection module (FAULT).

3. The diagnostic engine of claim 1, **characterized in that** during operation of said diagnostic engine, said predetermined interrupt time moment being a time moment within a period of statistically unlikely use of said line by a user.

4. The diagnostic engine of claim 1, **characterized in that** during operation of said diagnostic engine, said predetermined interrupt time moment being a time moment within a period for which substantially no user traffic is measured.

5. The diagnostic engine of claim 1, **characterized in that** during operation of said diagnostic engine, said predetermined interrupt time moment being a time moment substantially shortly after detection of showtime-loss.

6. The diagnostic engine according to claim 1, **characterized in that** said termination of said line is located at a telecommunication access node location.

7. The diagnostic engine according to claim 1, **characterized in that** said line is a DSL telecommunication line.

8. A method for remotely analyzing a fault of a telecommunication line **characterized in that** said method comprises the steps of:
- measuring with a first measurement module (DELT) first predetermined line characteristics at a termination of said line according to a Metallic Line Testing measurement technique; and
- detecting, based upon said first predetermined line characteristics, a fault on said line and thereby informing a determining module (DET) with a fault signal; and
- determining with a showtime module (SHOWTIME) whether said line being in showtime mode and informing said determining module with a showtime loss signal; and
- with said determining module (DET) for:
a) in the event of receiving of such showtime loss signal, sending an activation signal for activation of a second measurement module (SELT); and
b) in the event of reception of said fault signal, sending at a predetermined time moment an interrupt signal to an interrupt module (INTER) and sending thereafter such activation signal; and
- interrupting, with said interrupt module (INTER), upon reception of such interrupt signal, showtime mode of said line; and
- with said second measurement module measuring, upon reception of such activation signal, second predetermined line characteristics at said termination of said line according to a Single Ended Line Testing measurement technique; and
- combining said measured first and second predetermined line characteristics of said line and analyzing therewith further features of said fault.

9. The method according to claim 8, **characterized in** by determining said predetermined interrupt time moment by means of a time moment being substantially shortly after detecting said fault.

10. The method according to claim 8, **characterized in** by determining said predetermined interrupt time moment by means of a time moment within a period of statistically unlikely use of said line by a user.

11. The method according to claim 8, **characterized in** by determining said predetermined interrupt time moment by means of a time moment within a period for which substantially no user traffic is measured.

12. The method according to claim 8, **characterized in** by determining said predetermined interrupt time moment by means of a time moment being substantially shortly after detection of showtime loss.
